# EUROPÄISCHE PATENTANMELDUNG

(11) **EP 1 076 476 A2**
(43) Veröffentlichungstag der Anmeldung: **14.02.2001**
(21) Anmeldenummer: 00116152.0
(22) Anmeldetag: 01.08.2000
(51) Int. Cl.: H05B 33/08

(54) **Vorrichtung zum Betreiben mindestens einer Leuchtdiode**

(30) Priorität: 11.08.1999 DE 19937923
(71) Anmelder: Patent-Treuhand-Gesellschaft für elektrische Glühlampen mbH, 81543 München (DE)
(72) Erfinder: Kastl, Roland, 82008 Unterhaching (DE)

(57) **Zusammenfassung**

Die Erfindung betrifft eine Vorrichtung zum Betreiben mindestens einer Leuchtdiode (LD) umfassend einen elektronischer Transformator (10), wobei mit dem Ausgang des elektronischer Transformators (10) ein Hochfrequenzgleichrichter (12) verbunden ist, dessen Ausgang mit mindestens einer Leuchtdiode (LD) verbunden ist, wobei der Hochfrequenzgleichrichter (12) und die mindestens eine Leuchtdiode (LD) zu einer separaten räumlichen Einheit (14) zusammengefaßt sind.

## Beschreibung

Die vorliegende Erfindung betrifft eine Vorrichtung zum Betreiben mindestens einer Leuchtdiode.

Leuchtdioden müssen ihrer Natur nach mit Gleichstrom versorgt werden. Ein direkter Betrieb von Leuchtdioden an Spannungsquellen ist daher nicht möglich. In der Praxis werden deshalb Leuchtdioden mittels angepaßter Gleichstromversorgungsschaltungen betrieben.

In einigen Einsatzgebieten von Leuchtdioden, beispielsweise im Möbelsektor, werden neben Leuchtdioden für spezielle Effekte auch Halogenlampen zu Beleuchtungszwecken eingesetzt. Im Gegensatz zu Leuchtdioden werden Halogenlampen an Hochfrequenzspannungsquellen betrieben. Im Stand der Technik wird daher eine separate Ansteuerschaltung für die Leuchtdioden und eine separate Ansteuerschaltung für die Halogenleuchten verwendet.

Die vorliegende Erfindung stellt sich die Aufgabe eine im Vergleich zum Stand der Technik kostengünstigere Realisierung vorzuschlagen, die sich insbesondere durch geringen Montageaufwand auszeichnet.

Zur Lösung dieser Aufgabe sieht die Erfindung vor, daß am Ausgang des elektronischen Transformators, der in der Ansteuerschaltung einer Halogenleuchte enthalten ist, ein Hochfrequenzgleichrichter angeschlossen wird, an dessen Ausgang dann die mindestens eine Leuchtdiode angekoppelt wird, wobei der Hochfrequenzgleichrichter und die mindestens eine Leuchtdiode zu einer separaten räumlichen Einheit zusammengefaßt sind.

Durch diese Maßnahme läßt sich der im Stand der Technik in der Ansteuerschaltung für die mindestens eine Leuchtdiode vorzusehende Transformator einsparen. Im Hinblick darauf, daß die Dimensionierung des Transformators für die Ansteuerung der mindestens einen Leuchtdiode auf Netzfrequenz zu erfolgen hat, ergibt sich hier eine erhebliche Kosten- und Platzersparnis. Der in der Ansteuerschaltung für die Halogenlampe vorgesehene elektronische Transformator umfaßt üblicherweise zunächst einen Netzgleichrichter, dem ein Hochfrequenzwechselrichter folgt, der wiederum mit einem Übertrager verbunden ist. Da der Übertrager für Hochfrequenz ausgelegt ist, ist dieses Bauteil von wesentlich geringerer Größe als der Transformator in der Ansteuerschaltung für die mindestens eine Leuchtdiode im Stand der Technik.

Da das Ausgangssignal des elektronischen Transformators für die Ansteuerung mindestens einer Leuchtdiode nicht geeignet ist, wird eine Gleichrichtung durchgeführt. Die Zusammenfassung des Hochfrequenzgleichrichters und der mindestens einen Leuchtdiode zu einer separaten räumlichen Einheit gemäß der erfindungsgemäßen Lösung erleichtert den Montageaufwand erheblich, da die Verbindung zwischen Hochfrequenzgleichrichter und Leuchtdiode bereits vorliegt, zur Installation nur noch diese separate Einheit mit dem Ausgang des elektronischen Transformators verbunden werden muß.

Insofern besteht die erfindungsgemäße Lösung auch darin, eine Vorrichtung bereitzustellen, die einen Hochfrequenzgleichrichter und mindestens eine Leuchtdiode umfaßt, wobei der Hochfrequenzgleichrichter und die mindestens eine Leuchtdiode zu einer separaten räumlichen Einheit zusammengefaßt sind.

Besonders vorteilhaft ist hierbei der Hochfrequenzgleichrichter in dem Leuchtengehäuse der mindestens einen Leuchtdiode angeordnet, wobei vorgesehen werden kann, daß der Hochfrequenzgleichrichter und die mindestens eine Leuchtdiode auf einer einzigen Platine angeordnet sind. Durch die Unterbringung in einem gemeinsamen Gehäuse, wird der Herstellungsaufwand für derartige Kombinationen reduziert, was mit einer Kostenreduktion einhergeht.

Der Hochfrequenzgleichrichter kann als Halbwellengleichrichter oder als Vollwellengleichrichter ausgeführt sein. Besonders vorteilhaft umfaßt der Hochfrequenzgleichrichter eine Glättungsschaltung.

Hinsichtlich der für den Betrieb von Leuchtdioden nötigen Strombegrenzung können zweierlei Realisierungsarten vorgesehen werden: Zum einen wird am Ausgang des Hochfrequenzgleichrichters mindestens eine Serienschaltung umfassend mindestens einen Vorwiderstand und mindestens eine Leuchtdiode angeordnet, zum anderen wird am Ausgang des elektronischen Transformators mindestens ein Wechselstromwiderstand, insbesondere mindestens eine Induktivität, vorgesehen. Hinsichtlich der letztgenannten Realisierung ist es besonders vorteilhaft, den Wechselstromwiderstand durch den Hochfrequenzgleichrichter zu realisieren. Für diesen Zweck besonders vorteilhafte Hochfrequenzgleichrichter können der Patentanmeldung GR 99 P 5556 DE , Erfinder Felix Franck, mit dem Titel "Gleichrichter mit Mittelpunkteinspeisung" entnommen werden.

Weitere vorteilhafte Weiterbildungen der Erfindung sind in den Unteransprüchen definiert.

Im folgenden werden Ausführungsbeispiele der Erfindung unter Hinweis auf die beigefügten Zeichnungen näher beschrieben:

Es stellen dar:
- Fig. 1: in Blockschaltbildform eine Schaltungsanordnung, in der die erfindungsgemäße Lösung realisiert ist;
- Fig. 2: in Blockschaltbildform eine detailliertere Darstellung des Aufbaus des elektronischen Transformators von Fig. 1.
- Fig. 3a bis 3e: zeigen unterschiedliche Ausführungsformen von Hochfrequenzgleichrichtern zur Verwendung in der erfindungsgemäßen Vorrichtung.

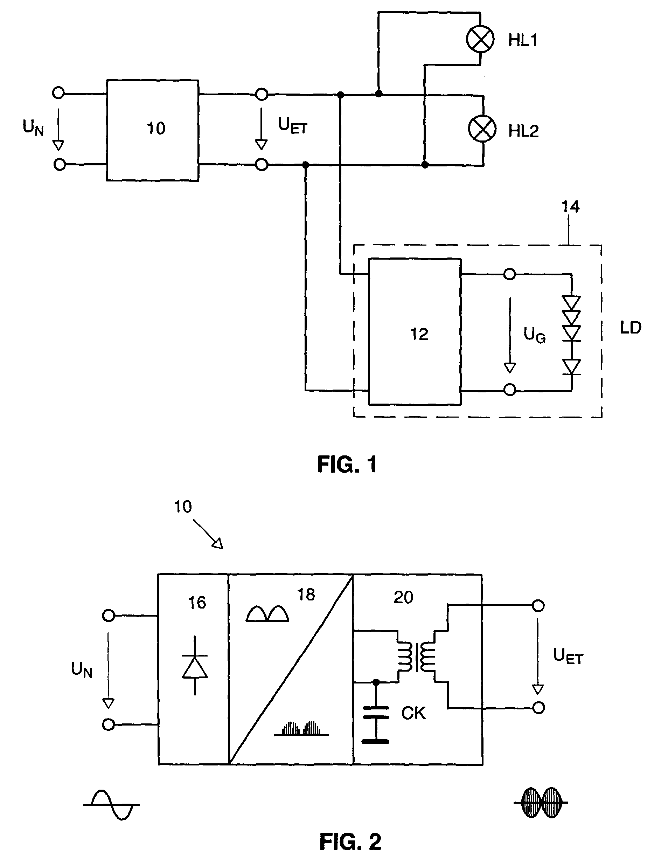

Fig. 1 zeigt eine Schaltungsanordnung, bei der am Eingang eines elektronischen Transformators 10 eine Netzspannung, beispielsweise 230 V / 50 Hz anliegt. Am Ausgang des elektronischen Transformators 10 wird eine Spannung U_{ET} bereitgestellt, die zum Betrieb zweier Halogenleuchten HL1, HL2 dient. Die Spannung U_{ET} beträgt beispielsweise 12 V_{EFF}/ 35 kHz ... 200 kHz. Sie wird außerdem einem Hochfrequenzgleichrichter 12 zugeführt, an dessen Ausgang eine Spannung U_{G} zum Betrieb mehrerer Leuchtdioden LD bereitgestellt wird. Gestrichelt ist angedeutet, daß der Hochfrequenzgleichrichter 12 sowie die Leuchtdioden LD in einer separaten räumlichen Einheit 14 angeordnet sind. Hierbei kann vorgesehen sein, daß der Hochfrequenzgleichrichter 12 in dem Leuchtengehäuse der mindestens einen Leuchtdiode LD angeordnet ist, wobei eine Anordnung des Hochfrequenzgleichrichters 12 und der mindestens einen Leuchtdiode LD auf einer einzigen Platine, wie erwähnt, besonders vorteilhaft ist.

Fig. 2 zeigt eine detailliertere Darstellung des elektronischen Transformators 10 von Fig. 1. In einer ersten Stufe 16 wird die Netzspannung U_{N} zunächst gleichgerichtet. Daran schließt sich ein Hochfrequenzwechselrichter 18 an, auf den ein Übertrager 20 folgt, der für Hochfrequenz dimensioniert ist und dessen Primärseite mit einem Koppelkondensator C_{K} verbunden ist. Der zeitliche Verlauf der Ausgangsspannung U_{ET} kann der Darstellung von Fig. 2 rechts unten entnommen werden.

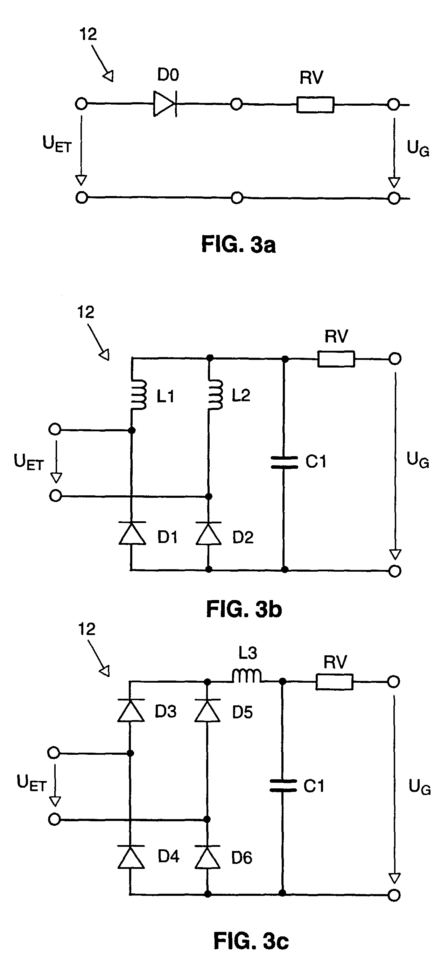

In den Figuren 3a bis 3e, in denen gleiche Bezugszeichen gleiche Bauteile bezeichnen, sind beispielhaft verschiedene Ausführungsformen von Hochfrequenzgleichrichtern 12 dargestellt, die in der erfindungsgemäßen Vorrichtung Anwendung finden können. Fig. 3a zeigt zunächst einen Halbwellengleichrichter mit einer Diode D0 sowie einem ohmschen Vorwiderstand RV zur Strombegrenzung. Die Figuren 3b bis 3e zeigen Vollwellengleichrichter, wobei in Fig. 3b die Spannung U_{ET} zwischen den Mittelpunkten zweier Serienschaltungen aus je einer Spule L1, L2 und einer Diode D1, D2 angelegt wird. Ein Kondensator C1 dient der Glättung. In Fig. 3c wird die Spannung U_{ET} zwischen die Mittelpunkte zweier aus je zwei Dioden D3, D4, D5, D6 bestehenden Serienschaltungen angelegt. Eine Spule L3 ist zwischen das Diodennetzwerk und den Vorwiderstand RV geschaltet.

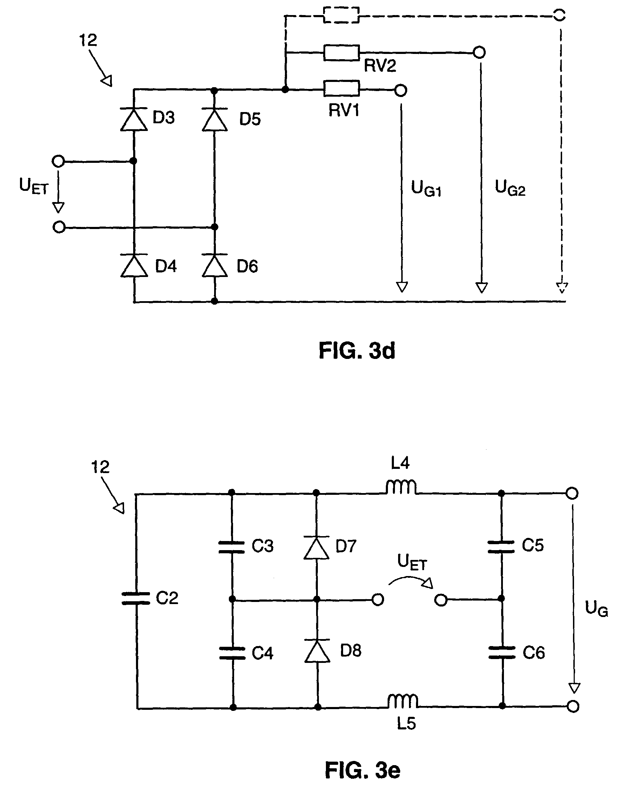

Fig. 3d zeigt eine gegenüber Fig. 3c abgewandelte Variante ohne Glättung mit mehreren parallelgeschalteten Vorwiderständen RV1, RV2 zur Bereitstellung mehrerer, insbesondere auch unterschiedlicher Ausgangsspannungen UG1, UG2.

Die in Fig. 3e dargestellte Variante zeichnet sich dadurch aus, daß sie im Vergleich zu den Ausführungsformen gemäß Figuren 3a bis 3e keinen Ohm'schen Vorwiderstand RV benötigt. Vielmehr wird hier die Strombegrenzung durch den Hochfrequenzgleichrichter selbst, der als Wechselstromwiderständ wirkt, bewirkt. Die Wirkungsweise eines derartigen Gleichrichters und weitere vergleichbare Ausführungsformen, insbesondere deren Vorteile können der Patentanmeldung GR 99 P 5556 DE, Erfinder Felix Franck, mit dem Titel "Gleichrichter mit Mittelpunkteinspeisung" entnommen werden, deren Offenbarung durch diese Bezugnahme in die vorliegende Anmeldung mitaufgenommen wird.

## Patentansprüche

1. Vorrichtung zum Betreiben mindestens einer Leuchtdiode (LD) umfassend einen elektronischer Transformator (10), wobei mit dem Ausgang des elektronischer Transformators (10) ein Hochfrequenzgleichrichter (12) verbunden ist, dessen Ausgang mit mindestens einer Leuchtdiode (LD) verbunden ist, wobei der Hochfrequenzgleichrichter (12) und die mindestens eine Leuchtdiode (LD) zu einer separaten räumlichen Einheit (14) zusammengefaßt sind.

2. Vorrichtung, die den simultanen Betrieb mindestens einer Halogenlampe (HL1, HL2) und mindestens einer Leuchtdiode (LD) ermöglicht, umfassend einen elektronischer Transformator (10), wobei die mindestens eine Halogenlampe (HL1, HL2) mit dem Ausgang des elektronischer Transformators (10) verbunden ist, dadurch gekennzeichnet, daß mit dem Ausgang des elektronischer Transformators (10) weiterhin ein Hochfrequenzgleichrichter (12) verbunden ist, dessen Ausgang mit mindestens einer Leuchtdiode (LD) verbunden ist, wobei der Hochfrequenzgleichrichter (12) und die mindestens eine Leuchtdiode (LD) zu einer separaten räumlichen Einheit (14) zusammengefaßt sind.

3. Vorrichtung nach Anspruch 1 oder 2, dadurch gekennzeichnet, daß der Hochfrequenzgleichrichter (12) in dem Leuchtengehäuse der mindestens einen Leuchtdiode (LD) angeordnet ist.

4. Vorrichtung nach einem der vorhergehenden Ansprüche, dadurch gekennzeichnet, daß der Hochfrequenzgleichrichter (12) und die mindestens eine Leuchtdiode (LD) auf einer einzigen Platine angeordnet sind.

5. Vorrichtung nach einem der vorhergehenden Ansprüche, dadurch gekennzeichnet, daß der Hochfrequenzgleichrichter (12) ein Halbwellengleichrichter oder ein Vollwellengleichrichter ist.

6. Vorrichtung nach einem der vorhergehenden Ansprüche, dadurch gekennzeichnet, daß der Hochfrequenzgleichrichter (12) eine Glättungsschaltung (C1) umfaßt.

7. Vorrichtung nach einem der vorhergehenden Ansprüche, dadurch gekennzeichnet, daß am Ausgang des Hochfrequenzgleichrichters (12) zur Strombegrenzung mindestens ein ohmscher Vorwiderstand (RV) angeordnet ist.

8. Vorrichtung nach einem der Ansprüche 1 bis 6, dadurch gekennzeichnet, daß am Ausgang des elektronischer Transformators (10) zur Strombegrenzung mindestens ein Wechselstromwiderstand, insbesondere mindestens eine Induktivität, angeordnet ist.

9. Vorrichtung nach Anspruch 8, dadurch gekennzeichnet, daß der Wechselstromwiderstand durch den Hochfrequenzgleichrichter (12) realisiert ist.

10. Vorrichtung umfassend einen Hochfrequenzgleichrichter und mindestens eine Leuchtdiode (LD), dadurch gekennzeichnet, daß der Hochfrequenzgleichrichter (12) und die mindestens eine Leuchtdiode (LD) zu einer separaten räumlichen Einheit (14) zusammengefaßt sind.
